# EUROPÄISCHE PATENTSCHRIFT

(11) **EP 1 820 677 B1**
(45) Veröffentlichungstag und Bekanntmachung des Hinweises auf die Patenterteilung: **16.04.2008**
(21) Anmeldenummer: 07000477.5
(22) Anmeldetag: 11.01.2007
(51) Int. Cl.: B60H 1/00, B62D 25/14

(54) **Instrumententräger und Verfahren zu seiner Herstellung**
Cross beam for an instrument panel and method of making the same
Poutre transversale de support d'une planche de bord et procédé de fabrication d'une telle poutre

(30) Priorität: 16.02.2006 DE 102006007529
(43) Veröffentlichungstag der Anmeldung: 22.08.2007
(73) Patentinhaber: Benteler Automobiltechnik GmbH, 33104 Paderborn (DE)
(72) Erfinder: Hitz, Andreas, 59597 Erwitte (DE); Viallard, Benjamin, 78000 Versailles (FR)
(74) Vertreter: Griepenstroh, Jörg

(56) Entgegenhaltungen:
- WO-A-95/23669
- DE-U1- 29 916 467
- DE-U1- 29 916 470

## Beschreibung

Die Erfindung betrifft ein Verfahren zur Herstellung eines Instrumententrägers mit den Merkmalen im Oberbegriff des Patentanspruchs 1 sowie einen nach diesem Verfahren hergestellten Instrumententräger mit den Merkmalen im Oberbegriff des Patentanspruchs 8.

Die DE 299 16 466 U1 offenbart einen Instrumententräger, der sich zwischen den A-Säulen eines Personenkraftwagens erstreckt und als Tragprofil mit integrierter Luftführung ausgestaltet ist. Das Tragprofil ist in Hybridbauweise als längliche Metallschale mit innerer Kunststoffverrippung ausgebildet und in Längsrichtung von mindestens einem Luftführungskanal durchsetzt. Hierbei ist die Metallschale formschlüssig mit dem Kunststoff verbunden. Diese Vorgehensweise eignet sich insbesondere bei im Querschnitt U-förmig konfigurierten Metallschalen. Wenn hingegen ein geschlossenes Tragprofil zum Einsatz kommen soll, ist es erforderlich, zwei Metallschalen miteinander zu verbinden. Die Verbindung kann formschlüssig, insbesondere auch stoffschlüssig, beispielsweise durch Verschweißen, erfolgen. Problematisch ist hierbei der beim Schweißen auftretende Wärmeeintrag, der zum Aufschmelzen eines zuvor eingelegten Luftführungskanals aus Kunststoff führen kann. Aus diesem Grund wird in der DE 299 16 470 U1, die als nächstliegender Stand der Technik angesehen wird, vorgeschlagen, ein wärmearmes Fügeverfahren einzusetzen und insbeondere die Metallschalen nur bereichsweise miteinander zu verbinden, beispielsweise durch Laserschweißung. Diese Problematik setzt häufig teure Schweißverfahren voraus und hat insofern Einfluss auf den Herstellungsprozess, als dass zusätzliche Anbauteile wie Halterungen zu einem Zeitpunkt mit der Metallschale verschweißt werden müssen, in welchem ein Luftführungskanal aus Kunststoff noch nicht innerhalb des Profilabschnitts positioniert werden kann.

Aus der DE 10 2004 049 398 A1 ist ein Querträger in Hybridbauweise bekannt, bei welchem ein innen liegender Kunststoffkanal in einen metallischen Querträger eingebettet ist. Der Querträger ist in Schalenbauweise erstellt, so dass die Halbschalen insbesondere schweißtechnisch miteinander verbunden werden müssen. Im Rahmen der Erfindung ist vorgesehen, dass ein Mindestabstand zwischen den Verbindungsstellen und der Kunststoffauskleidung so groß gewählt wird, dass eine hinreichend große Wärmeleitstrecke ausgebildet wird, um eine thermische Beeinflussung des Kunststoffes zu vermeiden. Eine weitere Bauform eines Instrumententrägers mit integrierter Luftführung ist Gegenstand der DE 200 05 471 U1. Auch hier ist vorgesehen, dass ein von metallischen Schalen umschlossenes Kunststoffrohr in radialem Abstand zu den Schalen distanziert ist, um eine thermische Beeinflussung des Kunststoffrohrs beim Verschweißen der Schalen zu vermeiden. Es soll daher ein Schweißverfahren, insbesondere ein Plasmaschweißverfahren mit düsenfernem Wirkfokus, zum Verbinden der Schalen zum Einsatz kommen. Bevorzugt stützt sich das Kunststoffrohr dabei durch angeformte Nocken in den Wänden der Schalen ab, so dass ein das Kunststoffrohr isolierender Luftspalt entsteht, der den Wärmeeintrag in das Kunststoffrohr reduziert.

Gegenstand der WO 2005/037 631 A1 ist ebenfalls ein Instrumententräger mit einem äußeren metallischen Profil in einem innen liegenden Kunststoffkanal. Auch in dieser Druckschrift wird vorgeschlagen, dass ein Abstand zwischen dem Kunststoffkanal und dem Profil im Bereich der Fügestellen vorgesehen sein soll, um den Wärmeübergang beim Verschweißen des Kanals zu reduzieren. Zudem soll der Zwischenbereich als Entgasungsöffnung oder Entgasungsspalt für aus dem Kunststoff austretende Gase ausgebildet sein. Darüber hinaus wird vorgeschlagen, den Kunststoffkörper durch ein Spritzgussverfahren mit dem äußeren Profil zu verbinden, wobei Verbindungselemente in der Art von Nietverbindungen ausgebildet werden.

Hiervon ausgehend liegt der Erfindung die Aufgabe zugrunde, ein Verfahren zur Herstellung eines Instrumententrägers aufzuzeigen, welches den Produktionsprozess insofern vereinfacht, als dass unterschiedliche Schweißverfahren mit einem unterschiedlichen Grad der Wärmeeinbringung in die zu verschweißenden Metallschalen zum Einsatz kommen können und als dass darüber hinaus eine andere Abfolge von Produktionsschritten möglich ist, ohne dass ein verfahrensbedingter Wärmeeintrag in die Metallschale zu einer Beschädigung eines Luftführungskanals aus Kunststoff führen würde. Ferner liegt der Erfindung die Aufgabe zugrunde, einen auf diesem Weg hergestellten Instrumententräger aufzuzeigen.

Diese Aufgabe wird bei einem Verfahren gemäß den Merkmalen des Patentanspruchs 1 gelöst. Die wesentliche Maßnahme ist, dass während des Verschweißens ein den Luftführungskanal außenseitig umströmendes Kühlmittel in den Profilabschnitt eingeleitet wird. Üblicherweise liegt der Luftführungskanal nicht vollflächig an der Innenseite der Metallschale an, sondern ist über Abstandshalter, beispielsweise über umfangsseitig verteilt angeordnete Noppen, von der Metallschale distanziert. Der verbleibende Luftspalt dient dabei zur Isolation. Dieser Luftspalt wird bei dem beanspruchten Verfahren zur Kühlung während des Schweißprozesses genutzt, indem ein Kühlmittel in diesen Luftspalt eingeleitet wird.

Eine effektive Kühlung setzt voraus, dass das Kühlmittel nicht unkontrolliert aus den Metallschalen entweichen kann. Sofern etwaige unvermeidbare Öffnungen in den Metallschalen erforderlich sind, ist es denkbar, dass diese während des Verschweißens bzw. während des Einleitens des Kühlmittels durch entsprechende Vorrichtungen abgedeckt werden. Noch besser ist es, wenn der Profilabschnitt keine Öffnungen aufweist, über die das Kühlmittel unkontrolliert entweichen könnte. Das Kühlmittel wird über ausschließlich für diesen Zweck vorgesehene Kühlmitteleinleitöffnungen in den Profilabschnitt eingeleitet. In einer ersten Ausführungsform ist vorgesehen, dass das Kühlmittel über Kühlmitteleinleitöffnungen eingeleitet wird, die in wenigstens einer Stirnseite des Profilabschnitts angeordnet sind. Auf diese Weise wird der Querschnitt des Profilabschnitts nicht durch zusätzliche Öffnungen geschwächt. Darüber hinaus kann das Kühlmitttel auf diese Art und Weise den Profilabschnitt in Längsrichtung und insbesondere über seine gesamte Länge durchströmen, was eine optimale Kühlung der miteinander zu verschweißenden Metallschalen von innen heraus ermöglicht.

Als Kühlmittel kann beispielsweise ein Gas in den Profilabschnitt eingeleitet werden. Hierbei kann es sich z.B. um Luft oder Kohlendioixid handeln. Denkbar ist es aber auch, eine Flüssigkeit in den Profilabschnitt einzuleiten. Auch Flüssigkeit/Gas-Gemische sind in diesem Zusammenhang denkbar.

Ein weiterer wesentlicher Vorteil des erfindungsgemäßen Verfahrens ist, dass auf diese Weise ein allseitig geschlossener Profilabschnitt mit innen liegendem Luftführungskanal geschaffen werden kann, ohne dass die Metallschalen steifigkeitsbeeinflussende Öffnungen besitzen müssen, abgesehen von dem zwingend erforderlichen Lufteinlass und Luftauslass. Dadurch erfüllt ein derart hergestellter Instrumententräger Crashanforderungen besser als Bauteile, die verfahrensbedingt mit Öffnungen oder Durchbrechungen versehen sein müssen.

Mit dem erfindungsgemäßen Verfahren können insbesondere Instrumententräger mit den Merkmalen des Patentanspruchs 8 hergestellt werden, die sich dadurch auszeichnen, dass nur in dem fahrerseitigen Profilabschnitt ein Luftführungskanal aus Kunststoff angeordnet ist, während der beifahrerseitige Profilabschnitt konfigurativ und werkstoffmäßig auf die dort zu erwartenden Beanspruchungen ausgelegt ist und insbesondere ohne innen liegenden Luftführungskanal ausgestattet ist. Der beifahrerseitige Profilabschnitt kann beispielsweise als Holm oder Rohr gefertigt sein und über ein entsprechendes Anschlussstück mit dem aus Metallschalen zusammengesetzten Profilabschnitt auf der Fahrerseite gekoppelt sein. Auf diese Weise können auch vollkommen unterschiedliche Werkstoffe auf der Fahrerseite und Beifahrerseite zum Einsatz kommen, um auf diese Art und Weise die Crashanforderungen eines solchen Bauteils zu erfüllen.

Die Erfindung wird nachfolgend anhand eines in schematischen Zeichnungen dargestellten Ausführungsbeispiels näher erläutert. Es zeigen:
- Figur 1: eine Seitenansicht eines Instrumententrägers, der sich zwischen schematisch angedeuteten A-Säulen eines Personenkraftwagens erstreckt;
- Figur 2: den Instrumententräger der Figur 1 entlang des Schnitts A-A der Figur 1 und
- Figur 3: eine vergrößerte Darstellung des linken Endes des Instrumententrägers in einer Schnittdarstellung gemäß Figur 2.

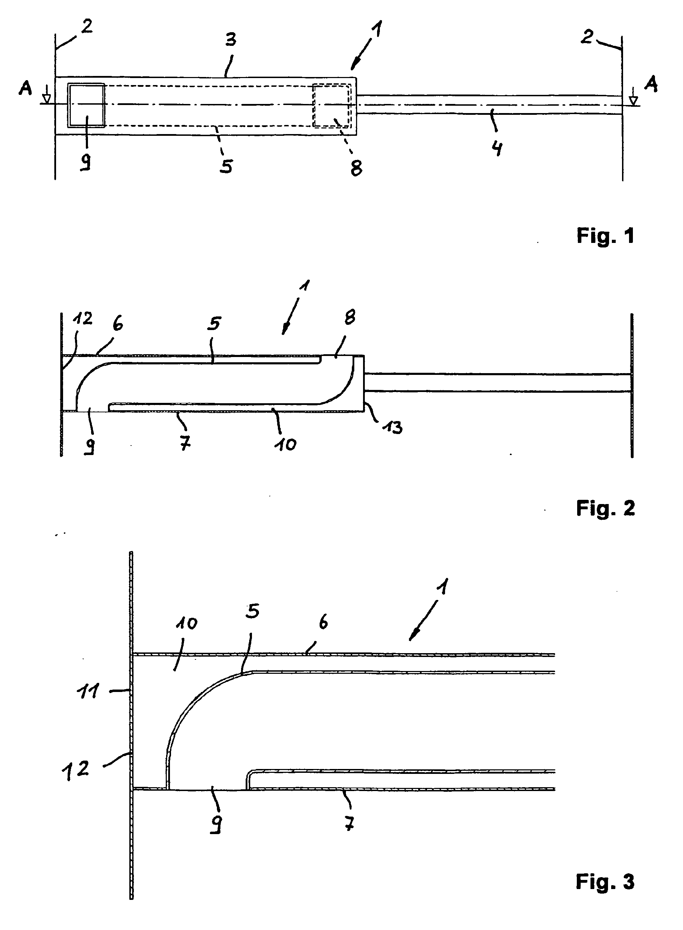

Figur 1 zeigt einen Instrumententräger 1, der sich zwischen schematisch angedeuteten A-Säulen 2 eines nicht näher dargestellten Personenkraftwagens erstreckt. Der Instrumententräger 1 gliedert sich in zwei unterschiedlich konfigurierte Profilabschnitte 3, 4, wobei in dem fahrerseitigen Profilabschnitt 3 ein Luftführungskanal 5 aus Kunststoff angeordnet ist. Der beifahrerseitige Profilabschnitt 4 besitzt einen wesentlich kleineren Querschnitt. In diesem Ausführungsbeispiel handelt es sich um ein im Verhältnis zum fahrerseitigen Profilabschnitt 3 schlankes gerades Rohrprofil ohne innen liegenden Luftführungskanal. Der Instrumententräger 1 besteht aus einem metallischen Werkstoff, insbesondere Stahl. Der beifahrerseitige Profilabschnitt ist konfigurativ und werkstoffmäßig auf die Beanspruchungen auf der Beifahrerseite abgestimmt.

Der fahrerseitige Profilabschnitt 3 ist in nicht näher dargestellter Weise aus zwei miteinander verschweißten Metallschalen 6, 7 hergestellt, zwischen welche zuvor der Luftführungskanal 5 aus Kunststoff gelegt worden ist. Der Luftführungskanal 5 ist in diesem Ausführungsbeispiel S-förmig konfiguriert und verbindet einen Lufteinlass 8, der etwa in der Mitte des Instrumententrägers 1 liegt und beispielsweise an ein Klimagerät angeschlossen ist, mit einem Luftauslass 9, der benachbart der fahrerseitigen A-Säule an der dem Lufteinlass 8 gegenüber liegenden Seite angeordnet ist.

Der Luftführungskanal 5 ist in nicht näher dargestellter Weise gegenüber den Metallschalen 6, 7 lageorientiert, wobei über große Bereiche ein Luftspalt 10 verbleibt. Dem Luftspalt 10 kommt im Rahmen der Erfindung eine besondere Bedeutung zu, da über eine Kühlmitteleinleitöffnung 11 ein Kühlmittel in den Luftspalt 10 eingeleitet wird, während die beiden Metallschalen 6, 7 miteinander verschweißt werden. Die Kühlmitteleinleitöffnung 11 befindet sich in diesem Ausführungsbeispiel in einem stirnseitig des Profilabschnitts 3 angeordneten Schließblech 12, über welches der Instrumententräger 1 mit der A-Säule verbunden wird. Eine weitere Kühlmitteleinleitöffnung kann beispielsweise in einem Schließblech 13 am anderen Ende des Profilabschnitts 3 angeordnet sein. Auf diese Weise kann das Kühlmittel über ein Stirnende des Profilabschnitts 3 in den Profilabschnitt 3 geleitet werden und über das andere Stirnende des Profilabschnitts 3 wieder aus dem Profilabschnitt 3 austreten. Das Kühlmittel bewirkt, dass sich der Luftführungskanal 5 nicht unter dem Einfluss der Schweißarbeiten, beim Verschweißen der Metallschalen 6, 7 unzulässig erwärmt und unter Umständen beschädigt wird. Auf diese Weise ist es möglich, Schweißverfahren mit höherem Wärmeeintrag einzusetzen und darüber hinaus auch nachfolgende Schweißoperationen an den Metallschalen 6, 7 vorzunehmen, die ohne entsprechende Kühlung bislang nicht möglich gewesen sind.

### Bezugszeichen:

- 1 -: Instrumententräger
- 2 -: A-Säule
- 3 -: fahrerseitiger Profilabschnitt v. 1
- 4 -: beifahrerseitiger Profilabschnitt v. 1
- 5 -: Luftführungskanal
- 6 -: Metallschale v. 3
- 7 -: Metallschale v. 3
- 8 -: Lufteinlasss
- 9 -: Luftauslass
- 10 -: Luftspalt
- 11 -: Kühlmitteleinleitöffnung
- 12 -: Schließblech
- 13 -: Schließblech

## Patentansprüche

1. Verfahren zur Herstellung eines Instrumententrägers, der sich zwischen den A-Säulen (2) eines Personenkraftwagens erstreckt und zwei metallische Profilabschnitte (3, 4) aufweist, wobei ein Luftführungskanal (5) aus Kunststoff zwischen zwei Metallschalen (6, 7) gelegt wird, die miteinander verschweißt werden und wobei der Luftführungskanal (5) einen Lufteinlass (8) mit einem Luftauslass (9) verbindet, **dadurch gekennzeichnet, dass** während des Verschweißens ein den Luftführungskanal (5) außenseitig umströmendes Kühlmittel in den Profilabschnitt (3) eingeleitet wird.

2. Verfahren nach Anspruch 1, **dadurch gekennzeichnet, dass** das Kühlmittel über Külmitteleinleitöffnungen (11) eingeleitet wird, die in wenigstens einer Stirnseite des Profilabschnitts (3) angeordnet sind.

3. Verfahren nach Anspruch 1 oder 2, **dadurch gekennzeichnet, dass** als Kühlmittel ein Gas in den Profilabschnitt (3) eingeleitet wird.

4. Verfahren nach Anspruch 3, **dadurch gekennzeichnet, dass** das Gas Kohlendioxid ist.

5. Verfahren nach Anspruch 3, **dadurch gekennzeichnet, dass** das Gas Luft ist.

6. Verfahren nach einem der Ansprüche 1 bis 5, **dadurch gekennzeichnet, dass** als Kühlmittel eine Flüssigkeit in den Profilabschnitt (3) eingeleitet wird.

7. Verfahren nach einem der Ansprüche 1 bis 6, **dadurch gekennzeichnet, dass** das Kühlmittel über ein Stirnende des Profilabschnitts (3) in den Profilabschnitt (3) geleitet wird und über das andere Stirnende des Profilabschnitts (3) aus dem Profilabschnitt (3) geleitet wird.

8. lnstrumententräger, hergestellt nach dem Verfahren gemäß einem der Patentansprüche 1 bis 7, der zwei miteinander verbundene Profilabschnitte (3, 4) aufweist, die konfigurativ und werkstoffmäßig auf die Beanspruchungen auf der Fahrerseite und der Beifahrerseite abgestimmt sind, **dadurch gekennzeichnet, dass** nur in dem fahrerseitigen Profilabschnitt (3) ein Luftführungskanal (5) aus Kunststoff angeordnet ist.

9. Instrumententräger nach Anspruch 8, **dadurch gekennzeichnet, dass** nur der fahrerseitige Profilabschnitt (3) aus miteinander verschweißten Metallschalen (6, 7) zusammengesetzt ist.

10. Instrumententafelträger nach Anspruch 8 oder 9, **dadurch gekennzeichnet, dass** der Profilabschnitt (3) mit dem Luftführungskanal (5) neben der wenigstens einen Kühlmitteleinleitöffnung (11), einem Auslass für das eingeleitete Kühlmittel sowie dem Lufteinlass (8) und dem Luftauslass (9) keine weiteren Öffnungen aufweist.

11. Instrumententafelträger nach einem der Ansprüche 8 bis 10, **dadurch gekennzeichnet, dass** die Kühlmitteleinleitöffnungen (11) in mit den Metallschalen (6, 7) verschweißten, stirnseitig des Profilabschnitts (3) angeordneten Schließblechen (12, 13) angeordnet sind.

## Claims

1. Method of producing a cross member for an instrument panel which extends between the A pillars (2) of a passenger car and has two metal profile sections (3, 4), with an air duct (5) made of plastic being placed between two metal shells (6, 7) that are welded to each other, and the air duct (5) connecting an air inlet (8) to an air outlet (9), **characterized in that** a cooling medium that flows around the outside of the air duct (5) is introduced into the profile section (3) during the welding.

2. Method according to Claim 1, **characterized in that** the cooling medium is introduced by way of cooling medium inlet openings (11), which are arranged in at least one end face of the profile section (3).

3. Method according to Claim 1 or 2, **characterized in that** a gas is introduced into the profile section (3) as the cooling medium.

4. Method according to Claim 3, **characterized in that** the gas is carbon dioxide.

5. Method according to Claim 3, **characterized in that** the gas is air.

6. Method according to one of Claims 1 to 5, **characterized in that** a liquid is introduced into the profile section (3) as the cooling medium.

7. Method according to one of Claims 1 to 6, **characterized in that** the cooling medium is directed into the profile section (3) by way of one end face of the profile section (3) and is directed out of the profile section (3) by way of the other end face of the profile section (3).

8. Cross member for an instrument panel, produced by the method according to one of Patent Claims 1 to 7, which has two profile sections (3, 4) that are connected to each other and are designed in terms of their configuration and material to meet the load requirements on the driver's side and the passenger's side, **characterized in that** an air duct (5) made of plastic is only arranged in the profile section (3) on the driver's side.

9. Cross member for an instrument panel according to Claim 8, **characterized in that** only the profile section (3) on the driver's side is made up of metal shells (6, 7) that are welded to each other.

10. Cross member for an instrument panel according to Claim 8 or 9, **characterized in that** the profile section (3) with the air duct (5) has no other openings apart from the at least one cooling medium inlet opening (11), an outlet for the cooling medium that is introduced and the air inlet (8) and air outlet (9).

11. Cross member for an instrument panel according to one of Claims 8 to 10, **characterized in that** the cooling medium inlet openings (11) are arranged in end plates (12, 13) that are welded to the metal shells (6, 7) and are arranged on the end faces of the profile section (3).

## Revendications

1. Procédé pour la fabrication d'une planche de bord qui s'étend entre les colonnes A (2) d'un véhicule de tourisme et présente deux sections profilées métalliques (3, 4), dans lequel une canalisation d'amenée d'air (5) en matière synthétique est disposée entre deux coques métalliques (6, 7) qui sont soudées entre elles et dans lequel la canalisation d'amenée d'air (5) relie une admission d'air (8) à une sortie d'air (9), **caractérisé en ce qu'**un agent réfrigérant est introduit au cours de l'opération de soudage dans la section profilée (3) en vue de sa circulation externe sur le pourtour de la canalisation d'amenée d'air (5).

2. Procédé selon la revendication 1, **caractérisé en ce que** l'agent réfrigérant est introduit par l'intermédiaire d'ouvertures (11) d'admission d'agent réfrigérant (11) qui sont disposées dans au moins un côté frontal de la section profilée (3).

3. Procédé selon la revendication 1 ou 2, **caractérisé en ce qu'**en tant qu'agent réfrigérant, on introduit un gaz dans la section profilée (3).

4. Procédé selon la revendication 3, **caractérisé en ce que** le gaz est du dioxyde de carbone.

5. Procédé selon la revendication 3, **caractérisé en ce que** le gaz est de l'air.

6. Procédé selon l'une des revendications 1 à 5, **caractérisé en ce qu'**en tant qu'agent réfrigérant, on introduit un liquide dans la section profilée (3).

7. Procédé selon l'une des revendications 1 à 6, **caractérisé en ce que** l'agent réfrigérant est introduit dans la section de profilé (3) par une extrémité frontale de la section profilée, et est amené à sortir de la section profilée (3) par l'autre extrémité frontale de la section profilée (3).

8. Dispositif de planche de bord réalisé selon le procédé de l'une des revendications 1 à 7, qui présente deux sections profilées (3, 4) reliées entre elles, qui sont adaptées du point de vue de la configuration et de la matière pour répondre aux sollicitations côté conducteur et côté passager, **caractérisé en ce qu'**une canalisation d'amenée d'air (5) en matière synthétique n'est disposée que dans la section de profilé (3) côté conducteur.

9. Dispositif de planche de bord selon la revendication 8, **caractérisé en ce que** seule la section profilée (3) côté conducteur est assemblée à partir de coques métalliques soudées (6, 7).

10. Dispositif de planche de bord selon la revendication 8 ou 9, **caractérisé en ce que** la section profilée (3) ne présente aucune autre ouverture en dehors de la canalisation d'amenée d'air (5), de la au moins une ouverture (11) d'admission d'agent réfrigérant d'une sortie de l'agent réfrigérant introduit ainsi que de l'entrée d'air (8) et la sortie d'air (9).

11. Dispositif de planche de bord selon l'une des revendications 8 à 10, **caractérisé en ce que** les ouvertures d'admission d'agent réfrigérant (11) sont disposées dans des tôles de fermeture (12, 13) soudées avec les coques métalliques (6, 7), sur le côté frontal de la section profilée (3).
